# EUROPEAN PATENT SPECIFICATION

(11) **EP 3 772 436 B1**
(45) Date of publication and mention of the grant of the patent: **11.05.2022**
(21) Application number: 20188190.1
(22) Date of filing: 28.07.2020
(51) Int. Cl.: B60R 19/56

(54) **BUMPER FOR INDUSTRIAL VEHICLES**
STOSSSTANGE FÜR INDUSTRIEFAHRZEUGE
PARE-CHOCS POUR VÉHICULES COMMERCIAL

(30) Priority: 06.08.2019 IT 201900014118
(43) Date of publication of application: 10.02.2021
(73) Proprietor: Takler S.r.l., 70022 Altamura (BA) (IT)
(72) Inventor: LORUSSO, Lorenzo, I-70022 Altamura, BARI (IT)
(74) Representative: Mitola, Marco

(56) References cited:
- EP-A1- 1 972 506
- EP-A1- 2 845 772
- DE-U1-202007 015 877
- JP-A- 2006 088 905

## Description

### FIELD OF APPLICATION

The present invention relates to a bumper for vehicles, in particular for industrial vehicles.

### BACKGROUND ART

As is known, bumpers arranged cantilevered with respect to a load-bearing structure connected to the chassis of the vehicle itself (or of the related trailer) are known in the field of transports, in particular of industrial vehicles.

The bumpers necessarily must have specific features of rigidity so as to pass the inspection tests (defined by respective legislation).

For this reason, it is known to use bumpers having geometries and/or materials such as to ensure the required features of rigidity.

Usually, the known solutions provide thickening the cross member which forms the main body of the bumper in order to ensure the rigidity requirements required by the legislation. Thereby, by increasing the thicknesses, the deformations of the cross member following the application of conventional loads are limited.

Thereby however, the known solutions result in two technical disadvantages.

On one hand, the bumpers are significantly weighed down, and on the other hand, the aesthetical shapes of the bumper itself are limited and/or worsened.

These are two non-negligible disadvantages, given that:
a) the weight of the bumper is an element of great interest for the manufacturers of industrial vehicles, therefore it must be limited to the greatest extent possible,
b) appearance has now taken on a predominant importance also in the field of industrial vehicles, whereby industrial vehicles with a modern and captivating appearance are increasingly being manufactured.

The document EP 1 972 506 A1 discloses a bumper according to the preamble of claim 1.

### PRESENTATION OF THE INVENTION

The need is therefore felt to solve the drawbacks and limitations mentioned above with reference to the prior art.

I.e., the need is felt to make available a bumper for industrial vehicles which is both lightweight and resistant so as to pass the legislative inspection tests and which also has a captivating appearance that is not too massive, unlike the known solutions.

Such a need is met by a bumper for vehicles according to claim 1.

### DESCRIPTION OF THE DRAWINGS

Further features and advantages of the present invention will become more comprehensible from the following description of preferred embodiments thereof given by way of non-limiting examples, in which:

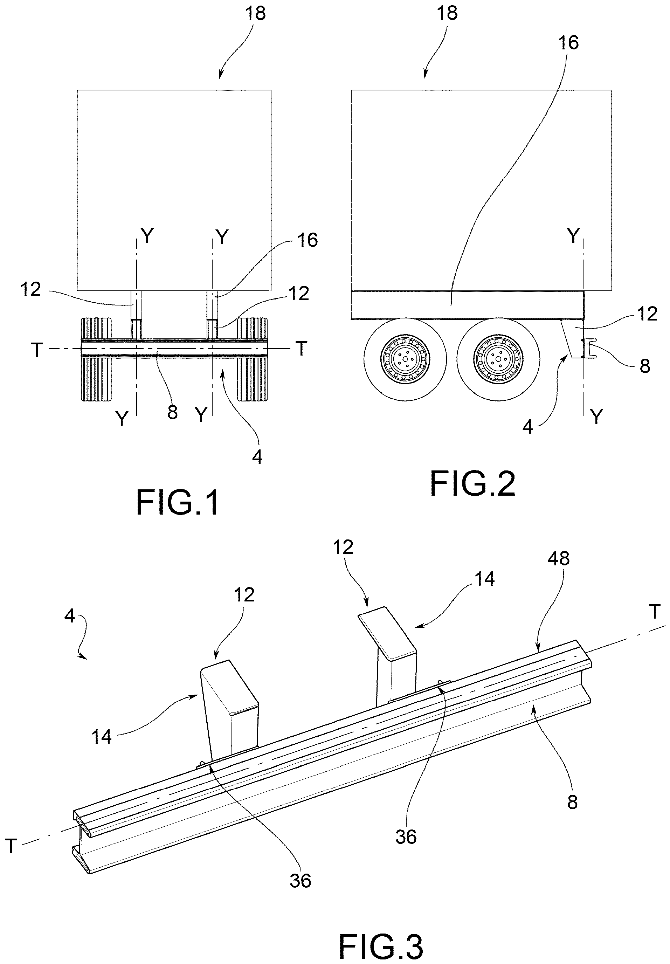

- Figure 1 shows a rear view of an industrial vehicle provided with a bumper according to an embodiment of the present invention;
- Figure 2 shows a side view of the vehicle in Figure 1;
- Figure 3 shows a front perspective view of a bumper according to the present invention;

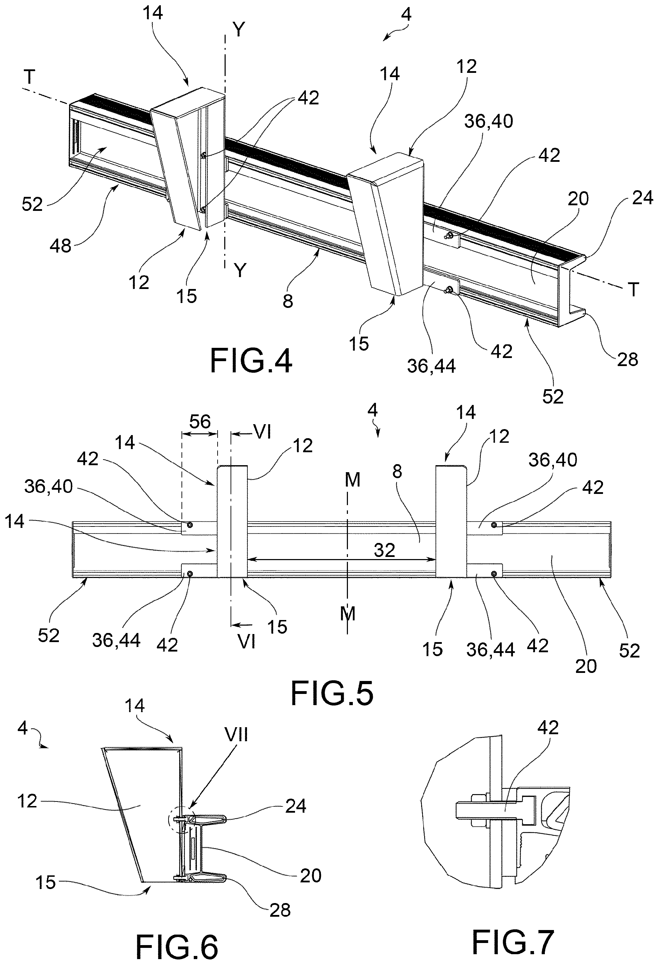

- Figure 4 shows a rear perspective view of a bumper according to the present invention;
- Figure 5 shows a rear view of the bumper in Figure 4, on the side of the arrow V indicated in Figure 4;
- Figure 6 shows a sectional view of the bumper in Figure 4, along the section plane VI-VI indicated in Figure 5;
- Figure 7 shows the enlarged detail VII indicated in Figure 6;

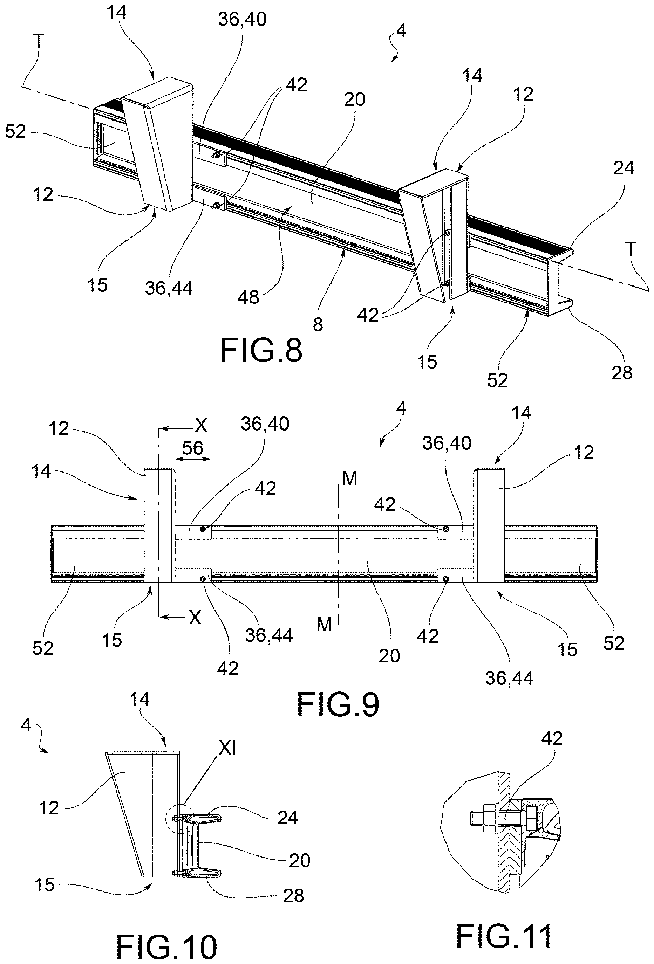

- Figure 8 shows a rear perspective view of a bumper according to a further embodiment of the present invention;
- Figure 9 shows a rear view of the bumper in Figure 8, on the side of the arrow IX indicated in Figure 8;
- Figure 10 shows a sectional view of the bumper in Figure 8, along the section plane X-X indicated in Figure 9;
- Figure 11 shows the enlarged detail XI indicated in Figure 10.

Elements or parts in common to the embodiments described will be indicated hereafter using the same reference numerals.

### DETAILED DESCRIPTION

With reference to the aforementioned figures, reference numeral 4 diagrammatically indicates a bumper for vehicles, in particular for industrial vehicles, according to the present invention.

It is worth saying that the definition of industrial vehicles is to be understood in the broadest, non-limiting sense.

Bumper 4 in particular comprises a cross member 8, extending along a prevailing transverse direction T-T, a pair of fastening brackets 12, fixed to the cross member 8 and shaped to allow the cantilevered fixing of said cross member 8 to chassis 16 of an associable vehicle 18 or vehicle trailer 18.

It is worth saying that the cross member 8 may have any size and width according to the type of vehicle 18 onto which it is applied.

According to an embodiment, the cross member 8 has a double 'T' or 'C' section with respect to a section plane perpendicular to the prevailing transverse direction T-T, comprising a central section 20 and two flaps 24, 28, respectively an upper flap and a lower flap.

The central section 20 and/or the flaps 24, 28 may be both solid and hollow.

The fastening brackets 12 are directed predominantly along a vertical direction Y-Y, orthogonal to said prevailing transverse direction T-T.

Moreover, the fastening brackets 12 are spaced apart from each other, along the prevailing transverse direction T-T, by a transverse pitch 32.

Preferably, the fastening brackets 12 are made by means of a box structure having a trapezoidal section with respect to a section plane perpendicular to the prevailing transverse direction T-T and parallel to said vertical direction Y-Y. In particular, said trapezoidal section tapers from an upper fixing end 14 of the fastening brackets 12 to the associable chassis 16 towards a lower fixing end 15 of the brackets 12 fastening to the cross member 8.

According to the invention, each fastening bracket 12 comprises two reinforcing counterplates 36, i.e. an upper reinforcing counterplate 40 and a lower reinforcing counterplate 44, which at least partially overlap the cross member 8 along said prevailing transverse direction T-T.

More in detail, the upper reinforcing counterplate 40 overlaps and is fixed to the upper flap 24 of the cross member 8 and the lower reinforcing counterplate 44 overlaps and is fixed to the lower flap 28 of the cross member 8.

The reinforcing counterplates 24 are spaced apart from each other along said vertical direction Y-Y and are sized so that each one overlaps a corresponding flap.

Preferably, the fastening brackets 12 and the related upper 40 and lower 44 reinforcing counterplates are arranged symmetrically with respect to a centreline plane M-M of the cross member 8, perpendicular to said prevailing transverse direction T-T.

The cross member 8 is made, for example of aluminium and/or an aluminium alloy. Thereby, the related weight is limited; obviously, other metal materials, metal material alloys may be used, but also polymer materials, for example reinforced or loaded polymer materials.

The fastening brackets 12 and the related reinforcing counterplates 36 preferably are made of steel.

Also in this case, the use is possible of different, both metal and non-metal materials.

The fastening brackets 12 and the related reinforcing counterplates 36 are fixed to the cross member 8 by means of mechanical connection means 42 such as screws, bolts, rivets and/or welding.

The reinforcing counterplates 36 may also be made in one piece with the related fastening brackets 12.

The reinforcing counterplates 36 are arranged and fixed on the cross member 8 on the side of a rear face 48 of the cross member 8. Rear face means a face facing the forward movement direction of vehicle 18 to which bumper 4 belongs.

According to the invention, the reinforcing counterplates 36 are interposed between the fastening brackets 12 and the cross member 8.

The reinforcing counterplates 36 therefore extend cantilevered with respect to the respective fastening brackets 12, along the prevailing transverse direction T-T. Thereby, not only do the reinforcing counterplates 36 actually create a further fastening element of the cross member 8, but they significantly reduce the stretch of cross member 8 supported in a cantilevered manner by the fastening brackets 12 with respect to the prevailing transverse direction T-T.

Therefore, the rigidity of the cross member 8, in particular of stretches of transverse cantilevered cross member 52 with respect to the fastening brackets 12, is significantly increased and therefore allows the legislation on resistance and deformation of bumper 4 to be passed.

Preferably, the reinforcing counterplates 36, 40, 44 have a transverse extension 56 greater than, or equal to a transverse width of the fastening brackets 12.

The transverse extension 56 of the upper reinforcing counterplate 40 preferably is equal to the transverse extension 56 of the lower counterplate 44.

Said transverse extension 56 of the reinforcing counterplates 40, 44, and also the configuration of the reinforcing counterplates, may in turn be according to the transverse extension pitch 32 between the fastening brackets 12.

According to an embodiment, said transverse pitch 32 is less than or equal to one third of a maximum transverse width of the cross member 8, along said prevailing transverse direction T-T, and the reinforcing counterplates 36, 40, 44 face away from a centreline plane M-M of the cross member 8.

According to a further embodiment of the present invention, said transverse pitch 32 is greater than one third of a maximum transverse width of the cross member 8, along the prevailing transverse direction T-T, and the reinforcing counterplates 36, 40, 44 are facing a centreline plane M-M of the cross member 8, so as to be mutually facing.

As can be appreciated from the description above, the present invention allows to overcome the drawbacks presented in the prior art.

Advantageously, the solution of the present invention allows a bumper to be obtained which, above all, meets the requirements of resistance and deformation provided by the current legislation.

Such a result is obtained without strengthening the structure of the bumper, in particular of the cross member, and therefore without involving increasing the weight of the overall structure. Moreover, by virtue of the fact that the cross member of the bumper does not require strengthening and therefore increasing the weight thereof, it is also possible to economize on the material and therefore on the weight of the related fastening brackets (allowing a further reduction of the overall weight of the bumper with respect to the known solutions).

Indeed, the reinforcing counterplates reduce the cantilevered transverse portion of the stretches of cross member with respect to the fastening brackets, and therefore significantly increase the bending rigidity of the cross member with respect to an impact from longitudinal direction (i.e. in the event of collision).

Such a significant increase in rigidity is not obtained by modifying (and therefore increasing the weight of) the structure and/or the geometry of the cross member of the bumper, rather by adding the reinforcing counterplates which allow a significant increase in rigidity to be obtained with respect to an entirely negligible increase in weight, and without modifying the appearance of the bumper (considering that the reinforcing counterplates substantially are concealed).

The increase in rigidity provided by the reinforcing counterplates applies both in relation to the stretches of cross member cantilevered from the fastening brackets towards the outside of the bumper (i.e. away from the centreline plane) and in relation to the stretches of cross member cantilevered from the fastening brackets towards the inside of the bumper (i.e. approaching the centreline plane).

Moreover, such results may be obtained without modifying the overall appearance of the bumper, which may therefore have slender and relatively tapering shapes: thereby, not only are the designer's selections of appearance unconstrained, but a bumper may be made which, regardless of the technical function thereof, may be an embellishing aesthetical element of the entire rear structure of the vehicle.

In order to meet contingent, specific needs, those skilled in the art can make several changes and variants to the solutions described above, all contained within the scope of the invention as defined by the following claims.

## Claims

1. Bumper (4) for industrial vehicles (18) comprising:
- a cross member (8), extending along a prevailing transverse direction (T-T),
- a pair of fastening brackets (12), fixed to the cross member (8) and shaped to allow the cantilevered fixing of said cross member (8) to the chassis (16) of an associable vehicle (18),
- said fastening brackets (12) being directed predominantly along a vertical direction (Y-Y), orthogonal to said prevailing transverse direction (T-T),
- said fastening brackets (12) being spaced apart from each other, along the prevailing transverse direction (T-T), by a transverse pitch (32),
**characterized in that**
each fastening bracket (12) comprises two reinforcing counterplates (36,40,44), respectively an upper reinforcing counterplate (36,40) and a lower reinforcing counterplate (36,44), which at least partially overlap the cross member (8) along said prevailing transverse direction (T-T),
wherein the reinforcing counterplates (36,40,44) are interposed between the fastening brackets (12) and the cross member (8).

2. Bumper (4) for industrial vehicles (18) according to claim 1, wherein said upper and lower reinforcement counterplates (36,40,44) are spaced apart along said vertical direction (Y-Y).

3. Bumper (4) for industrial vehicles (18) according to any one of the preceding claims, wherein the cross member (8) has a double 'T 'or 'C' section with respect to a section plane perpendicular to the prevailing transverse direction (T-T), comprising a central section (20) and two flaps, respectively an upper flap (24) and a lower flap (28).

4. Bumper (4) for industrial vehicles (18) according to claim 3, wherein the reinforcing counterplates (36,40,44) are sized so that the upper reinforcing counterplate (36,40) overlaps and is fixed to the upper flap (24) and the lower reinforcing counterplate (36,44) overlaps and is fixed to the lower flap (28).

5. Bumper (4) for industrial vehicles (18) according to any one of the claims from 1 to 4, wherein the fastening brackets (12) and the relative reinforcing counterplates (36,40,44) are arranged symmetrically with respect to a centreline plane (M-M) of the cross member (8), perpendicular to said prevailing transverse direction (T-T).

6. Bumper (4) for industrial vehicles (18) according to any one of the preceding claims, wherein the cross member (8) is made of aluminium and/or an aluminium alloy.

7. Bumper (4) for industrial vehicles (18) according to any one of the preceding claims, wherein the fastening brackets (12) and the relative reinforcing counterplates (36,40,44) are made of steel.

8. Bumper (4) for industrial vehicles (18) according to any one of the preceding claims, wherein the fastening brackets (12) and the relative reinforcing counterplates (36,40,44) are fixed to the cross member (8) by means of mechanical connection means (42) such as screws, bolts, rivets and/or welding.

9. Bumper (4) for industrial vehicles (18) according to any one of the preceding claims, wherein the reinforcing counterplates (36,40,44) are arranged and fixed on the cross member (8) on the side of a rear face (48) of said cross member (8).

10. Bumper (4) for industrial vehicles (18) according to any one of the preceding claims, wherein the reinforcing counterplates (36,40,44) have a transverse extension (56) greater than or equal to a transverse width of the fastening brackets (12).

11. Bumper (4) for industrial vehicles (18) according to any one of the preceding claims, wherein the fastening brackets (12) are made by means of a box structure having a trapezoidal section with respect to a section plane perpendicular to the prevailing transverse direction (T-T) and parallel to said vertical direction (Y-Y), said section tapering from an upper fixing end (14) of the fastening brackets (12) to the associable chassis (16) towards a lower fixing end (15) of the fastening brackets (12) to the cross member (8).

12. Bumper (4) for industrial vehicles (18) according to any one of the preceding claims, wherein said transverse pitch (32) is less than or equal to one third of a maximum transverse width of the cross member (8), along said prevailing transverse direction (T-T), and wherein said reinforcing counterplates (36,40,44) face away from a centreline plane (M-M) of the cross member (8) .

13. Bumper (4) for industrial vehicles (18) according to any one of the claims from 1 to 11, wherein said transverse pitch (32) is greater than one third of a maximum transverse width of the cross member (8), along said prevailing transverse direction (T-T), and wherein said reinforcing counterplates (36,40,44) are facing a centreline plane (M-M) of the cross member (8), so as to be mutually facing.

14. Bumper (4) for industrial vehicles (18) according to any one of the preceding claims, wherein the reinforcing counterplates (36,40,44) are in one piece with the respective fastening brackets (12).

## Patentansprüche

1. Stoßstange (4) für Industriefahrzeuge (18), umfassend:
- einen Querträger (8), der sich entlang einer vorherrschenden Querrichtung (T-T) erstreckt,
- ein Paar von Befestigungswinkeln (12), die an dem Querträger (8) befestigt und so geformt sind, dass sie die freitragende Befestigung des Querträgers (8) an dem Fahrgestell (16) eines zugehörigen Fahrzeugs (18) ermöglichen,
- wobei die Befestigungswinkel (12) vorwiegend entlang einer vertikalen Richtung (Y-Y) ausgerichtet sind, die orthogonal zu der vorherrschenden Querrichtung (T-T) ist,
- wobei die Befestigungswinkel (12), entlang der vorherrschenden Querrichtung (T-T), in einem Querabstand (32) voneinander beabstandet sind,
**dadurch gekennzeichnet, dass**
- jeder Befestigungswinkel (12) zwei verstärkende Gegenplatten (36, 40, 44), jeweils eine obere verstärkende Gegenplatte (36, 40) und eine untere verstärkende Gegenplatte (36, 44), umfasst, die den Querträger (8) zumindest teilweise entlang der vorherrschenden Querrichtung (T-T) überlappen,
wobei die verstärkenden Gegenplatten (36, 40, 44) zwischen den Befestigungswinkeln (12) und dem Querträger (8) angeordnet sind.

2. Stoßstange (4) für Industriefahrzeuge (18) nach Anspruch 1, wobei die obere und die untere verstärkende Gegenplatte (36, 40, 44) entlang der vertikalen Richtung (Y-Y) voneinander beabstandet sind.

3. Stoßstange (4) für Industriefahrzeuge (18) nach einem beliebigen der vorhergehenden Ansprüche, wobei der Querträger (8) in Bezug auf eine Schnittebene, die senkrecht zu der vorherrschenden Querrichtung (T-T) ist, ein doppeltes ,T'- oder ,C'-Profil aufweist, das einen mittleren Abschnitt (20) und zwei Schenkel, jeweils einen oberen Schenkel (24) und einen unteren Schenkel (28), umfasst.

4. Stoßstange (4) für Industriefahrzeuge (18) nach Anspruch 3, wobei die verstärkenden Gegenplatten (36, 40, 44) so bemessen sind, dass die obere verstärkende Gegenplatte (36, 40) den oberen Schenkel (24) überlappt und daran befestigt ist, und die untere verstärkende Gegenplatte (36, 44) den unteren Schenkel (28) überlappt und daran befestigt ist.

5. Stoßstange (4) für Industriefahrzeuge (18) nach einem beliebigen der Ansprüche 1 bis 4, wobei die Befestigungswinkel (12) und die jeweiligen verstärkenden Gegenplatten (36, 40, 44) in Bezug auf eine Mittellinienebene (M-M) des Querträgers (8), die senkrecht zu der vorherrschenden Querrichtung (T-T) ist, symmetrisch angeordnet sind.

6. Stoßstange (4) für Industriefahrzeuge (18) nach einem beliebigen der vorhergehenden Ansprüche, wobei der Querträger (8) aus Aluminium und/oder einer Aluminiumlegierung hergestellt ist.

7. Stoßstange (4) für Industriefahrzeuge (18) nach einem beliebigen der vorhergehenden Ansprüche, wobei die Befestigungswinkel (12) und die jeweiligen verstärkenden Gegenplatten (36, 40, 44) aus Stahl hergestellt sind.

8. Stoßstange (4) für Industriefahrzeuge (18) nach einem beliebigen der vorhergehenden Ansprüche, wobei die Befestigungswinkel (12) und die jeweiligen verstärkenden Gegenplatten (36, 40, 44) mittels mechanischer Verbindungsmittel (42), wie Schrauben, Bolzen, Nieten, und/oder durch Schweißung an dem Querträger (8) befestigt sind.

9. Stoßstange (4) für Industriefahrzeuge (18) nach einem beliebigen der vorhergehenden Ansprüche, wobei die verstärkenden Gegenplatten (36, 40, 44) auf der Seite einer hinteren Fläche (48) des Querträgers (8) an dem Querträger (8) angeordnet und befestigt sind.

10. Stoßstange (4) für Industriefahrzeuge (18) nach einem beliebigen der vorhergehenden Ansprüche, wobei die verstärkenden Gegenplatten (36, 40, 44) eine Quererstreckung (56) aufweisen, die größer als oder gleich einer Querbreite der Befestigungswinkel (12) ist.

11. Stoßstange (4) für Industriefahrzeuge (18) nach einem beliebigen der vorhergehenden Ansprüche, wobei die Befestigungswinkel (12) mittels einer Kastenstruktur hergestellt werden, die einen trapezförmigen Querschnitt in Bezug auf eine Schnittebene aufweist, die senkrecht zu der vorherrschenden Querrichtung (T-T) und parallel zu der vertikalen Richtung (Y-Y) ist, wobei sich der Querschnitt von einem oberen Befestigungsende (14) der Befestigungswinkel (12) an dem zugehörigen Fahrgestell (16) hin zu einem unteren Befestigungsende (15) der Befestigungswinkel (12) an dem Querträger (8) verjüngt.

12. Stoßstange (4) für Industriefahrzeuge (18) nach einem beliebigen der vorhergehenden Ansprüche, wobei der Querabstand (32), entlang der vorherrschenden Querrichtung (T-T), kleiner als oder gleich einem Drittel einer maximalen Querbreite des Querträgers (8) ist, und wobei die verstärkenden Gegenplatten (36, 40, 44) von einer Mittellinienebene (M-M) des Querträgers (8) abgewandt sind.

13. Stoßstange (4) für Industriefahrzeuge (18) nach einem beliebigen der Ansprüche 1 bis 11, wobei der Querabstand (32), entlang der vorherrschenden Querrichtung (T-T), größer als ein Drittel einer maximalen Querbreite des Querträgers (8) ist, und wobei die verstärkenden Gegenplatten (36, 40, 44) einer Mittellinienebene (M-M) des Querträgers (8) so zugewandt sind, dass sie einander zugewandt sind.

14. Stoßstange (4) für Industriefahrzeuge (18) nach einem beliebigen der vorhergehenden Ansprüche, wobei die verstärkenden Gegenplatten (36, 40, 44) einstückig mit den jeweiligen Befestigungswinkeln (12) ausgebildet sind.

## Revendications

1. Pare-chocs (4) pour véhicules industriels (18) comprenant :
- un élément de traverse (18) s'étendant dans une direction essentiellement transversale (T-T),
- une paire d'équerres de fixation (12) attachées à l'élément de traverse (18) et formées pour rendre possible la fixation décalée de l'élément de traverse (18) au châssis (16) d'un véhicule (18) pouvant être associé,
- les équerres de fixation (12) étant orientées principalement dans une direction verticale (Y-Y), perpendiculaire à la direction essentiellement transversale (T-T),
- les équerres de fixation (12) étant espacées l'une de l'autre, dans la direction essentiellement transversale (T-T), d'un espacement transversal (32),
**caractérisé en ce que** chaque équerre de fixation (12) comprend deux contreplaques de renforcement (36, 40, 44), respectivement une contreplaque de renforcement supérieure (36, 40) et une contreplaque de renforcement inférieure (36, 44), se chevauchant au moins partiellement avec l'élément de traverse (8) dans la direction essentiellement transversale (T-T),
les contreplaques de renforcement (36, 40, 44) étant interposées entre les équerres de fixation (12) et l'élément de traverse (8).

2. Pare-chocs (4) pour véhicules industriels (18) selon la revendication 1, **caractérisé en ce que** les contreplaques de renforcement supérieure et inférieure (36, 40, 44) sont espacées l'une de l'autre dans la direction verticale (Y-Y).

3. Pare-chocs (4) pour véhicules industriels (18) selon l'une des revendications précédentes, **caractérisé en ce que** l'élément de traverse (8) a une section transversale en 'double T' ou 'C' par rapport à une section plane perpendiculaire à la direction essentiellement transversale (T-T), comprenant une section centrale (20) et deux ailes, respectivement une aile supérieure (24) et une aile inférieure (28).

4. Pare-chocs (4) pour véhicules industriels (18) selon la revendication 3, **caractérisé en ce que** les contreplaques de renforcement (36, 40, 44) ont des dimensions telles que la contreplaque de renforcement supérieure (36, 40) se chevauche avec, et est fixée sur, l'aile supérieure (24) et la contreplaque de renforcement inférieure (36, 44) se chevauche avec, et est fixée sur, l'aile inférieure (28).

5. Pare-chocs (4) pour véhicules industriels (18) selon l'une des revendications 1 à 4, **caractérisé en ce que** les équerres de fixation (12) et les contreplaques de renforcement (36,40, 44) respectives sont disposées symétriquement par rapport à un plan central (M-M) de l'élément de traverse (8), perpendiculaire à la direction essentiellement transversale (T-T).

6. Pare-chocs (4) pour véhicules industriels (18) selon l'une des revendications précédentes, **caractérisé en ce que** l'élément de traverse (8) est fait en aluminium et/ou en un alliage d'aluminium.

7. Pare-chocs (4) pour véhicules industriels (18) selon l'une des revendications précédentes, **caractérisé en ce que** les équerres de fixation (12) et les contreplaques de renforcement (36, 40, 44) respectives sont faites en acier.

8. Pare-chocs (4) pour véhicules industriels (18) selon l'une des revendications précédentes, **caractérisé en ce que** les équerres de fixation (12) et les contreplaques de renforcement (36, 40, 44) respectives sont fixées à l'élément de traverse (8) par des moyens de connexion mécaniques (42) tels que des vis, des boulons, des rivets et/ou la soudure.

9. Pare-chocs (4) pour véhicules industriels (18) selon l'une des revendications précédentes, **caractérisé en ce que** les contreplaques de renforcement (36, 40, 44) respectives sont disposées et fixées à l'élément de traverse (8) sur le côté de la face arrière (48) dudit élément de traverse (8).

10. Pare-chocs (4) pour véhicules industriels (18) selon l'une des revendications précédentes, **caractérisé en ce que** les contreplaques de renforcement (30, 40, 44) ont une étendue transversale (56) plus grande ou égale à la largeur transversale des équerres de fixation (12).

11. Pare-chocs (4) pour véhicules industriels (18) selon l'une des revendications précédentes, **caractérisé en ce que** les équerres de fixation (12) sont faites au moyen d'une structure en caisson ayant une section trapézoïdale par rapport à une section plane perpendiculaire à la direction essentiellement transversale (T-T) et parallèle à la direction verticale (Y-Y), ladite section allant en se rétrécissant à partir d'une extrémité supérieure (14) de fixation des équerres de fixation (12) sur le châssis (16) pouvant être associé, vers une extrémité inférieure (15) de fixation des équerres de fixation (12) sur l'élément de traverse (8).

12. Pare-chocs (4) pour véhicules industriels (18) selon l'une des revendications précédentes, **caractérisé en ce que** l'espacement transversal (32) est inférieur ou égal à un tiers de la largeur transversale maximale de l'élément de traverse (8), dans ladite direction essentiellement transversale (T-T), et **en ce que** les contreplaques de renforcement (36, 40, 44) sont orientées à l'opposé d'un plan central (M-M) de l'élément de traverse (8).

13. Pare-chocs (4) pour véhicules industriels (18) selon l'une des revendications 1 à 11, **caractérisé en ce que** l'espacement transversal (32) est plus grand que le tiers de la largeur transversale maximale de l'élément de traverse (8), dans ladite direction essentiellement transversale (T-T), et **en ce que** lesdites contreplaques de renforcement (36, 40, 44) sont orientées vers un plan central (M-M) de l'élément de traverse (8), si bien qu'ils se font face l'un l'autre.

14. Pare-chocs (4) pour véhicules industriels (18) selon l'une des revendications précédentes, **caractérisé en ce que** les contreplaques de renforcement (36, 40, 44) forment une seule pièce avec les équerres de fixation (12) respectives.
